# EUROPÄISCHE PATENTSCHRIFT

(11) **EP 1 830 094 B1**
(45) Veröffentlichungstag und Bekanntmachung des Hinweises auf die Patenterteilung: **30.04.2008**
(21) Anmeldenummer: 06004318.9
(22) Anmeldetag: 03.03.2006
(51) Int. Cl.: F16D 23/14

(54) **Ausrückvorrichtung für eine Reibungskupplung eines Kraftfahrzeuges mit einer mehrteiligen Schiebehülse**
Clutch release device for a friction clutch of a motor vehicule with a multi part push sleeve
Butée de débrayage pour un embrayage à friction d'un véhicule automobile avec un manchon poussé multi-pièce

(43) Veröffentlichungstag der Anmeldung: 05.09.2007
(73) Patentinhaber: ZF FRIEDRICHSHAFEN AG, 88046 Friedrichshafen (DE)
(72) Erfinder: Otto, Thomas, Dr., 97424 Schweinfurt (DE); Voit, Herbert, 97422 Schweinfurt (DE); Wehner, Manfred, 97502 Euerbach (DE)

(56) Entgegenhaltungen:
- FR-A- 2 805 018
- FR-A- 2 808 059
- PATENT ABSTRACTS OF JAPAN Bd. 2000, Nr. 26, 1. Juli 2002 (2002-07-01) -& JP 2001 241465 A (NACHI FUJIKOSHI CORP), 7. September 2001 (2001-09-07)

## Beschreibung

Die vorliegende Erfindung betrifft eine Ausrückvorrichtung für eine Reibungskupplung eines Kraftfahrzeuges gemäß dem Oberbegriff des Patentanspruchs 1. Eine solche Ausrückvorrichtung mit einer mehrteiligen Schiebehülse ist aus JP-A-2001 241 465 bakannt.

Eine solche Ausrückvorrichtung zur Betätigung einer Kraftfahrzeugreibungskupplung, wie diese beispielsweise in der DE 197 00 930 A1 beschrieben wird, erfordert für jede Fahrzeugplattform eine Einzelfestlegung. Das bedeutet, dass die Ausrückvorrichtung je nach technischer Spezifikation der Kupplung, der zu deren Betätigung erforderlichen Ausrückkräfte und dem in einem Antriebsstrang zur Verfügung stehenden Bauraum speziell ausgelegt und dimensioniert werden muss. Insbesondere variieren dabei das zwischen den Anlagebereichen von Kupplungshebel bzw. Kupplungsgabel und dem Angriffspunkt des Kupplungsbetätigungsorgans, z.B. den Zungenenden einer Membranfeder, vorgegebene Längenmaß, der Innendurchmesser der Schiebehülse sowie die Breite des Anlagebereichs des Kupplungshebels an der Schiebehülse. Beispielsweise sind zur Darstellung von Ausrückvorrichtungen mit verschiedenen Einbaubaulängen selbst bei gleichem Innendurchmesser der Schiebehülse, gleicher Breite des Anlagebereichs für den Kupplungshebel und gleicher Ausrücklagergeometrie eine Mehrzahl unterschiedlicher Schiebehülsen erforderlich, die sich lediglich in dem vorgenannten Längenmaß unterscheiden. Daraus resultiert eine erhebliche und mit hohen Werkzeugkosten verbundene Teilevielfalt.

Die Erfindung stellt sich von diesem Problem ausgehend die Aufgabe, eine Ausrückvorrichtung bereitzustellen, die die Teilevielfalt und die damit einhergehenden Kosten reduziert.

Die vorstehend genannte Aufgabe wird gelöst durch eine gattungsgemäße Ausrückvorrichtung mit dem kennzeichnenden Merkmal des Patentanspruchs 1.

Dadurch wird die Schiebehülse konstruktiv aufgeteilt in einen ersten Teilbereich, welcher bei mehreren unterschiedlich gestalteten Ausrückvorrichtungen identisch ist und in einen zweiten Teilbereich, welcher bei mehreren unterschiedlich gestalteten Ausrückvorrichtungen verschiedenartig ausgebildet ist. Das heißt, eine erfindungsgemäße Ausrückvorrichtung umfasst in diesem Fall ein erstes, für jeden unterschiedlichen Typ einer Ausrückvorrichtung identisches Schiebehülsenteil, welches mit einem zweiten, je nach spezieller Vorgabe erforderlichen Schiebehülsenteil zusammengefügt wird. Auf diese Weise sind zwar zur Darstellung von n verschiedenen Ausrückvorrichtungen n+1 verschiedene Schiebehülsenteile erforderlich, jedoch können die dafür erforderlichen Werkzeug- und Herstellungskosten günstiger sein als bei der Fertigung von n verschiedenartigen einteiligen Schiebehülsen.

Es ist mit der vorgeschlagenen Lösung nunmehr insbesondere möglich, die bei verschiedenartigen Ausrückvorrichtungen auftretende Varianz im Inndurchmesser der Führungshülse und/oder der Breite des Anlagebereichs des Kupplungshebels und/oder der Einbaulänge nur durch eine der beiden Schiebehülsenteile darzustellen, während das andere Hülsenteil unverändert beibehalten werden kann.

Selbstverständlich ist die erfindungsgemäße mehrteilige Ausführung der Schiebehülse nicht auf eine Zweiteiligkeit beschränkt, vielmehr kann eine Schiebehülse auch aus drei oder noch mehreren Teilen zusammengefügt werden. Auf diese Weise wird ein Teile-Baukasten zur Darstellung von verschiedenen Ausrückvorrichtungen bereitgestellt, wobei eine hohe Anzahl von Gleichteilen verbaut werden kann.

Die Unteransprüche beschreiben vorteilhafte Ausgestaltungen und Weiterbildungen der Erfindung.

Zur Bewahrung einer möglichst großen Führungslänge der Ausrückvorrichtung auf dem Führungsrohr erweist es sich als günstig, die Teile der Schiebehülse radial zueinander anzuordnen. Erfindungsgemäß umfasst die Schiebehülse ein auf dem Führungsrohr angeordnetes Innenteil und ein sich auf dem Innenteil abstützendes Außenteil. Vorzugsweise weisen die beiden Teile axiale Anlageflächen auf, über welche die Teile gegenseitig axial anliegen. Über die axiale Position der Anlageflächen kann somit eine bestimmte Einbaulänge der Ausrückvorrichtung realisiert werden.

Erfindungsgemäß umfasst eines der Teile einen Lagerflansch zur Anordnung des Ausrücklagers und das jeweils andere Teil den Anlagebereich für das Betätigungselement zur Aufnahme einer Betätigungskraft.

Die bisherigen Ausführungen betreffen eine Ausrückvorrichtung, wobei aus zwei oder noch mehreren Teilen genau ein einziger bestimmter Typ einer Schiebehülse darstellbar ist. Wenn jedoch zumindest an einem der Schiebehülsenteile an den einander zugewandten Seiten in Umfangsrichtung mehrere axial gestufte Anlageflächen ausgebildet werden, so kann beim Zusammenbau von bspw. zwei Schiebehülsenteilen eine der gestuften Anlageflächen eines ersten Schiebehülsenteils mit der an dem anderen Teil ausgebildeten Gegenanlagefläche durch Einnahme einer bestimmten gegenseitige Drehlage der Schiebehülsenteile in Anlagekontakt gebracht werden. Auf diese Weise können je nach Anzahl von unterschiedlichen Axialstufen aus zwei oder mehreren Schiebehülsenteilen eine Mehrzahl von Schiebehülsen bzw. Ausrückvorrichtungen dargestellt werden, welche sich in deren Einbaulängen unterscheiden.

Vorteilhafterweise sind die gestuften Anlageflächen paarweise ausgeführt, wobei die zu einem Paar gehörenden Anlageflächen an der Mittelachse des betreffenden Schiebehülsenteils gegenüberliegend ausgeführt sind.

Gemäß einer weiteren vorteilhaften Ausgestaltung ist vorgesehen, an den Schiebehülsenteilen eine Verdrehsicherung vorzusehen, wodurch deren gegenseitige Drehlage bei einem Zusammenbau festgelegt und gesichert wird. Dieses kann in einfacher Weise bereits durch eine entsprechende Geometrie der gestuften Anlageflächen und der mit diesen kooperierenden Gegenanlageflächen oder durch zusätzliche Mittel, wie z.B. durch das Vorsehen von Axialfortsätzen an einem der Teile und diese aufnehmende Bohrungen an dem jeweils anderen Teil, dargestellt werden.

Zweckmäßigerweise sind an den Schiebehülsenteilen axiale Sicherungsmittel vorgesehen, die die Teile bei einem Zusammenbau zueinander unverlierbar sichern. Hierzu eignen sich prinzipiell alle einem Fachmann bekannten Maßnahmen, insbesondere werkzeugfreie Verbindungstechniken wie Rast- oder Schnappverbindungen, die lösbar oder als Einwegverbindung ausgeführt sein können.

Bevorzugt können die Verdrehsicherung und die axialen Sicherungsmittel gemeinsam, ausgeführt werden, indem z.B. im Bereich der Anlageflächen Rasthaken vorgesehen sind.

Die Teile der Schiebehülse lassen sich bevorzugt aus einem wärmebeständigen Kunststoff, z.B. Polyamid, als Spritzgussteil herstellen.

Zusätzlich ergeben sich durch die vorgeschlagene Lösung zahlreiche vorteilhafte Montagemöglichkeiten. Die Ausrückvorrichtung kann beispielsweise bereits von einem Zulieferer montiert und an einen Fahrzeughersteller als Fertigware geliefert werden. Es besteht jedoch auch die weitere Möglichkeit, die Ausrückvorrichtung als unmontierte Komponenten einem Kunden bereitzustellen, welcher dann in Abhängigkeit von dem jeweils zu bestückenden Fahrzeug die gerichtete Montage der Schiebehülse und damit der Ausrückvorrichtung vornimmt. Diese Variante ist ebenfalls sinnvoll, um beim Einbau der Ausrückvorrichtung im Fahrzeug durch Variation eines der Schiebehülsenteile Toleranzen am Einbauort auszugleichen. Des Weiteren kann die Mehrteiligkeit der Schiebehülse vorteilhaft ausgenutzt werden, um der sich bei einem Belagverschleiß der Kupplung einstellenden Verlagerung des Ausrückhubes zu kompensieren. Hierzu kann bei einem Serviceaufenthalt des Fahrzeuges die mehrteilige Schiebehülse der Ausrückvorrichtung demontiert und anschließend wieder zusammengesetzt werden, wobei durch die gerichtete Verbauung jetzt eine andere Einbaulänge, die sich von der vorherigen unterscheidet, realisiert wird. Gleichfalls bietet sich die Möglichkeit, nur das verschlissene Schiebehülsenteil auszutauschen und das andere, noch funktionsfähige Schiebehülsenteil beizubehalten.

Im Folgenden wird die Erfindung anhand der beigefügten Figuren beispielhaft erläutert. Es zeigen:
- Fig. 1 a-c: eine Axialschnittdarstellung einer Ausrückvorrichtung mit einer zweiteiligen Schiebehülse mit einer jeweils identischen Innenhülse und mit unterschiedlichen Lagerträgern;
- Fig. 2: eine perspektivische Darstellung einer aus zwei Teilen bestehenden Schiebehülse und deren Zusammenbau;
- Fig. 3a-e: eine perspektivische Darstellung von zwei Teilen einer Schiebehülse, die durch gegenseitige Einnahme unterschiedlicher Drehlagen 3fach längenvariabel miteinander verbaut werden können.

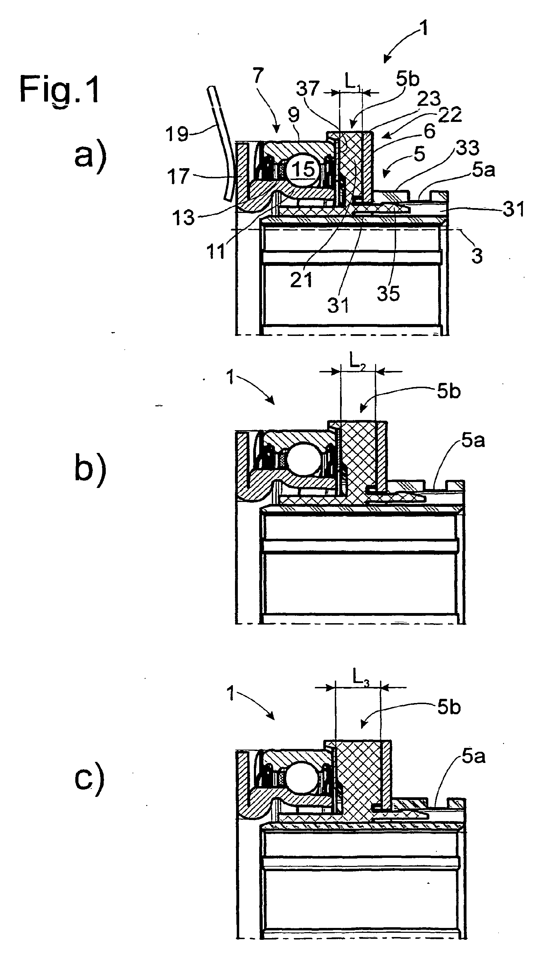

Fig. 1 zeigt drei Varianten einer im Grundaufbau baugleichen Ausrückvorrichtung 1 für eine Reibungskupplung eines Kraftfahrzeuges in einem Axialschnitt, die zunächst ein in Fig. 1a als Strichlinie angedeutetes Führungsrohr 3 und eine auf diesem axial verlagerbare Schiebehülse 5 umfasst, welche einen Anlagebereich 6 für einen als Betätigungselement dienenden Kupplungshebel aufweist, über den eine Betätigungskraft auf die Ausrückvorrichtung 1 eingeleitet werden kann.

Die Schiebehülse 5 trägt ein koaxial auf dieser angeordnetes Ausrücklager 7 mit einem drehfest zu der Schiebehülse 5 angeordneten Lageraußenring 9, in einem Lagerkäfig 13 befindliche Wälzkörper 15 und einem umlaufenden Lagerinnenring 11. Letzterer ist in axialer Richtung verlängert und bildet einen Radialflansch 17 aus, an den sich ein Betätigungsorgan 19 einer zeichnerisch nicht dargestellten Reibungskupplung, z.B. eine Membranfeder, zur Übertragung einer Ausrückkraft anlegen kann.

Es ist ersichtlich, dass die Schiebehülse 5 mehrteilig ausgeführt ist und ein auf dem Führungsrohr 3 angeordnetes hülsenförmiges Innenteil 5a und ein sich auf diesem abstützendes ebenfalls hülsenförmiges, in Fig. 1 mit einer Kreuzschraffur ausgefülltem Außenteil 5b umfasst, die beide aus einem Polyamidwerkstoff hergestellt sind. Das Außenteil 5b weist einen radial abstehenden scheibenförmigen Lagerflansch 21 auf, an dem das Ausrücklager 7 mit dessen feststehenden Lageraußenring 9 mittels mehrerer am Umfang verteilter, in Fig. 1 nicht sichtbaren Halteklammern befestigt ist.

An dem Innenteil 5a sind zwei am Umfang gegenüberliegende Anlagebereiche 6 für einen Kupplungshebel oder eine -gabel ausgeführt, wozu eine ringförmige Stahlblechscheibe 22 mit zwei nach radial außen abstehenden Vorsprüngen 23 axial und radial an dem Innenteil 5a eingefasst ist.

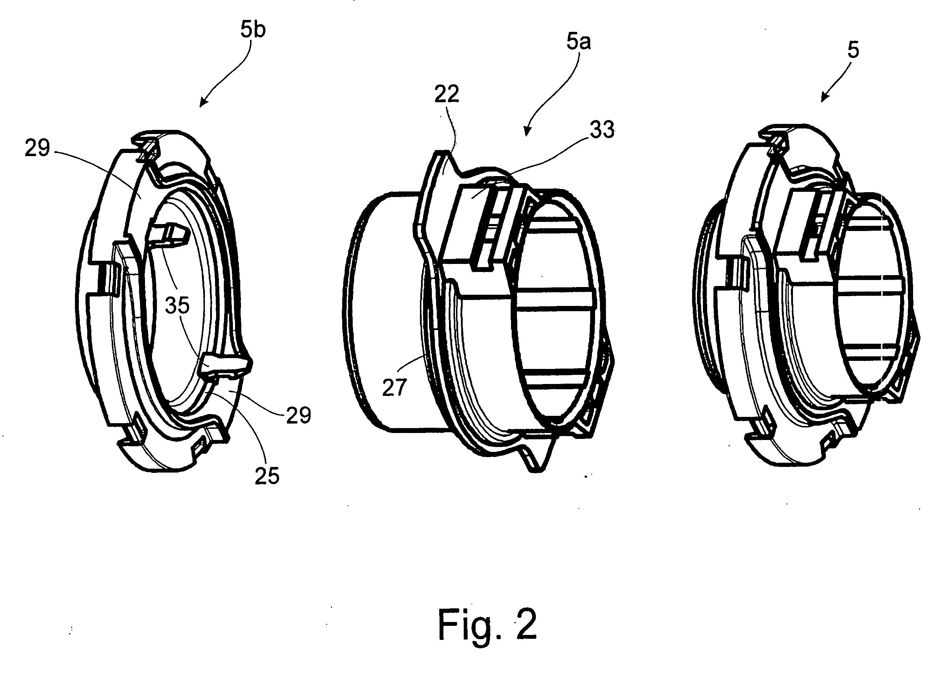

Zur Montage der Schiebehülse 5 wird wie in Fig. 2 dargestellt, das Außenteil 5b über das Innenteil 5a geschoben, wobei beide Teile 5a,b über an diesen, am Innen- bzw. am Außendurchmesser ausgeführte Anlageflächen 25, 27 gegenseitig axial anliegen und wobei an der dem Ausrücklager 7 abgewandten Seite des Lagerflansches 21 Vertiefungen 29 ausgebildet sind, in welche die beiden Anlagebereiche 23 für den Kupplungshebel formschlüssig eingreifen können und eine erste Vedrehsicherung bilden. Zur gegenseitigen Fixierung der beiden Schiebehülsenteile 5a, b sind am Innenteil 5a, genauer am Innenumfang der Stahlblechscheibe 22 im Bereich der Anlageflächen 6 axiale Ausnehmungen 31 vorgesehen, die sich durch Radialansätze 33 an dem aus Kunststoff gefertigten Innenteil 5a fortsetzen. An dem Außenteil 5b sind zwei dazu korrespondierende Rastzungen 35 ausgebildet, die in die vorgenannten Ausnehmungen 31 eingreifen und dort an einem Hinterschnitt einrasten können, wodurch beide Teile 5a, b axial unverlierbar und drehlagegesichert festgelegt sind.

Die in den Fig. 1 a-c dargestellten Ausrückvorrichtungen 1 unterscheiden sich durch die Verwendung unterschiedlicher Außenteile 5b, bei denen das Längenmaß Lx des Lagerflansches 21 mit x=1,2,3, welches den axialen Abstand einer Anlagefläche 37 für das Ausrücklager 7 und der Anlagefläche 6 für die Stahlblechscheibe 22 angibt, variiert wurde. Die Innenteile 5a sind baugleich, so dass aus einem Innenteil 5a und drei verschiedenen Außenteilen 5b drei verschiedene Ausrückvorrichtungen 1 zusammengestellt werden können.

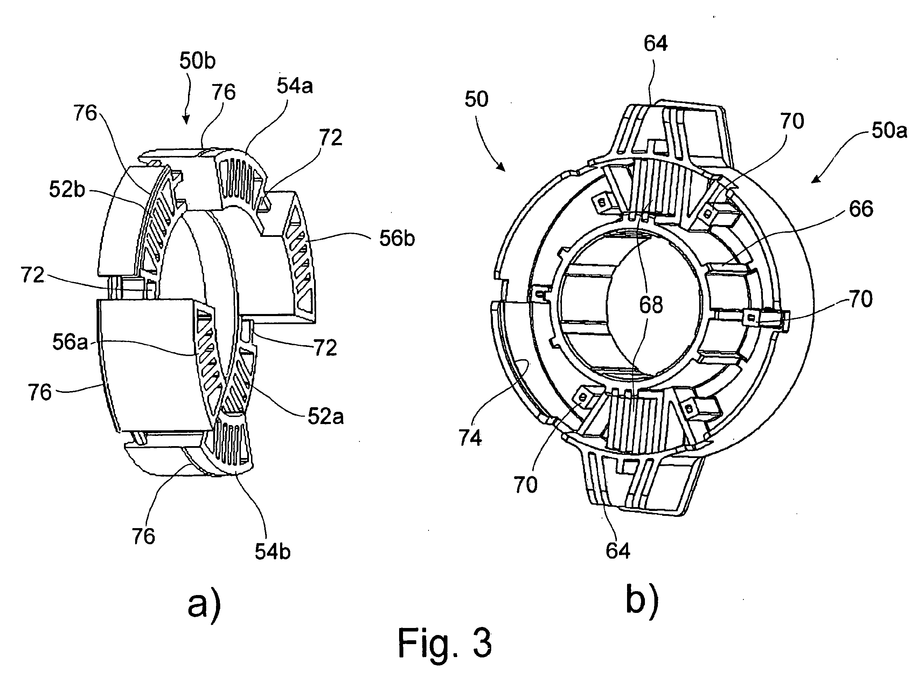

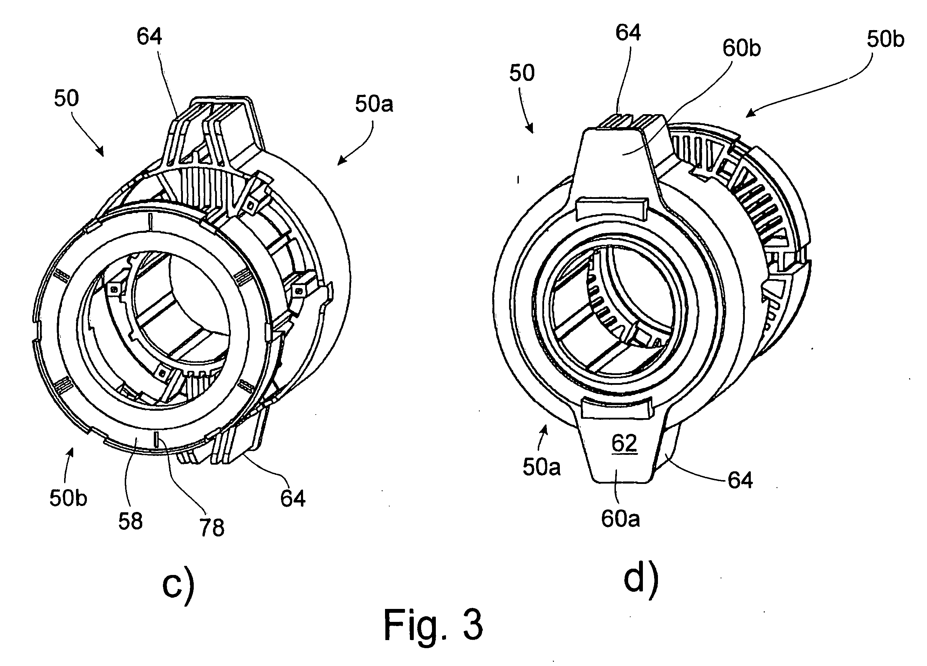

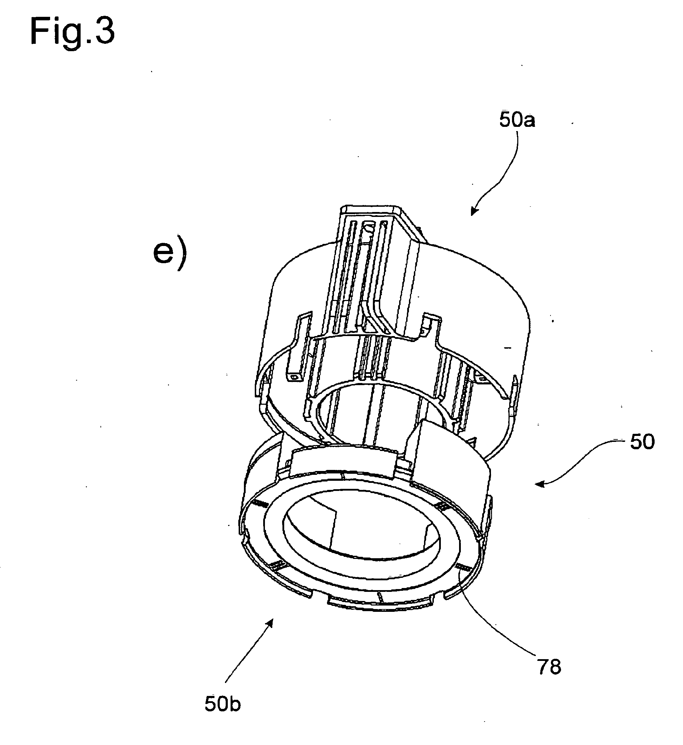

Die Fig. 3a-e zeigen eine weitere Schiebehülse 10 in zwei Teilen 50a,b, wobei durch deren gerichteten Zusammenbau drei verschiedene Varianten einer Schiebehülse 10 dargestellt werden können. Fig. 3a zeigt einen ringförmigen, als Außenteil 50b ausgebildeten Lagerträger, an dem in Umfangsrichtung paarweise, an der Mittelachse des Teils 50b gegenüberliegende axial gestufte Anlageflächen 52a,b; 54a, b, 56a,b ausgebildet sind. Die gegenüberliegende Fläche 58 ist im Wesentlichen eben ausbildet und dient der Aufnahme eines hier nicht dargestellten Ausrücklagers, welches mit in Aussparungen eingreifende Klammern an dem Außenteil befestigt wird.

Das Innenteil 50a ist in dessen Grundform als doppelwandiger, einseitig verschlossener Rohrzylinder mit einem Innenrohrabschnitt 502 und einem Außenrohrabschnitt 504 ausgebildet. Der Anlagebereich 60 für einen Kupplungshebel wird, wie in dem mit den Fig. 1, 2 erläuterten Beispiel, durch eine ringförmige Stahlblechscheibe 22 mit zwei nach radial außen abstehenden Vorsprüngen 60a, b gebildet, die axial und radial an dem Innenteil 50a eingefasst ist und im Bereich der Vorsprünge 60a,b durch eine an der Außenumfangsfläche des Außenrohrabschnitts 504 ausgebildete Rippenstruktur 64 abgestützt wird.

Der Innenrohrabschnitt 502 weist an dessen Außenumfangsfläche verteilte Axialstege 66 auf, deren radiale Enden einen Teilkreis mit einem Durchmesser bilden, der zur Aufnahme des Schiebehülsenaußenteils 50b geringfügig kleiner als dieses ist. Im Bereich der äußeren Rippenstruktur 64 sind radial zwischen dem Innen- 502) und dem Außenrohrabschnitt (504) zwei weitere Rippenstrukturen 68 ausgebildet, die innerhalb der axialen Erstreckung des Innenteils 50a zwei Anlageflächen zum Zusammenwirken mit jeweils einem Paar der gestuften Anlageflächen 52a,b; 54a, b, 56a,b des Außenteils 50b bereitstellen.

Zur Montage der Schiebehülse 10 wird das Außenteil 50b axial über den Innenrohrabschnitt 502 des Innenteils 50a geschoben, wobei durch Auswahl der relativen Drehlage der Teile 50a, b festgelegt wird, welches der gestuften Anlageflächenpaare 52a,b; 54a, b, 56a,b an den Gegen-Anlageflächen 68 des Innenteils 50a zur Anlage kommt. Zur Fixierung einer eingenommenen Drehlage sind am Innenteil 50a zwischen dem Innen- 502 und dem Außenrohrabschnitt 504 mehrere Axialzapfen 70 vorgesehen, welche in dazu korrespondierende Ausnehmungen 72 am Außenteil 50b eingreifen können. Die axiale Sicherung der Teile 50a,b erfolgt durch eine lösbare Schnappverbindung, welche an zwei gegenüberliegenden Sektoren der Innenumfangsfläche des Außenrohrabschnitts 504 Schnappnuten 74 und an dem Außenteil 50b eine entsprechend den gestuften Anlageflächen 52a,b; 54a, b, 56a,b in mehreren Segmenten ausgeführte Schnappwulst 76 umfasst, deren axiale Lage an jedem Anlageflächenpaar 52a,b; 54a, b, 56a,b unterschiedlich ist. Das heißt, dass je nach Drehlage der Teile 50a,b die Schnappnut 74 mit nur einem Schnappwulst-Paar 76 zusammenwirkt.

Die Fig. 3c-d zeigen zur besseren Veranschaulichung die gegenseitige Lagezuordnung des Innen- 50a und des Außenteils 50b bei der Montage. Zur Erleichterung der Montage weist das Außenteil 50b auf der dem Innenteil 50a axial abgewandten Stirnfläche einen entsprechend der gestuften Anlageflächen 52a,b; 54a, b, 56a,b ebenfalls paarweise aufgebrachten, von außen erkennbaren Strichcode 78 auf, der bei der Montage mit einer Markierung, z.B. einem Zeiger oder einem konstruktiven Merkmal bzw. einer signifikanten Stelle des Innenteils 50a, bspw. den Vorsprüngen 64 zur Deckung gebracht wird.

Die Teile 50a,b sind wiederum aus einem temperaturbeständigen Kunststoff ausgeführt und außerdem zur Vermeidung von Materialanhäufungen an mehreren Stellen mit Ausnehmungen versehen.

Alternativ oder zusätzlich zu einer in den Fig. 1-3 erläuterten Variation eines Längenmaßes kann durch die Mehrteiligkeit der Schiebehülse auch eine Variation eines Durchmessers, bspw. zur Anpassung an unterschiedliche Führungsrohrdurchmesser mittels eines oder mehrer entsprechender Adapterhülsen erfolgen.

### Bezugszeichenliste

- 1: Ausrücker
- 3: Führungsrohr
- 5 5, 50: Schiebehülse
- 5a, 50a: Innenteil
- 502: Innenrohrabschnitt
- 504: Außenrohrabschnitt
- 5b, 50b: Außenteil
- 10 6, 60: Anlagebereich
- 7: Ausrücklager
- 9: Lageraußenring
- 11: Lagerinnenring
- 13: Kugelkäfig
- 15 15: Wälzkörper
- 17: Radialflansch
- 19: Betätigungsorgan
- 21: Lagerflansch
- 23: Vorsprung
- 20 25, 27: Anlagefläche
- 29: Vertiefung
- 31: Ausnehmung
- 33: Radialansatz
- 35: Rastzunge
- 25 37: Anlagefläche
- 52a,b: Anlagefläche
- 54a,b: Anlagefläche
- 56a,b: Anlagefläche
- 58: Anlagefläche f. Ausrücklager
- 30 62: Stahlblechscheibe
- 60a, b: Vorsprung
- 64: äußere Rippenstruktur
- 68: innere Rippenstruktur
- 70: Axialzapfen
- 35 72: Ausnehmung
- 74: Schnappnut
- 76: Schnappwulst
- 78: Strichcode

## Patentansprüche

1. Ausrückvorrichtung (1) für eine Reibungskupplung eines Kraftfahrzeuges, umfassend
- ein Führungsrohr (3),
- eine auf dem Führungsrohr (3) mehrteilig ausgeführte und axial verlagerbare Schiebehülse (5; 50), die einen Anlagebereich (6; 60) für ein Betätigungselement zur Aufnahme einer Betätigungskraft aufweist,
- ein koaxial an der Schiebehülse (5; 50) angeordnetes Ausrücklager (7) mit einem drehfest zu der Schiebehülse (5; 50) angeordneten ersten Lagerring (9), Wälzkörpern (15) und einem umlaufenden zweiten Lagerring (11), der mit einem Betätigungsorgan (19) der Reibungskupplung in Wirkverbindung steht,
**dadurch gekennzeichnet,**
**dass** die Schiebehülse (5; 50) ein auf dem Führungsrohr (3) angeordnetes Innenteil (5a; 50a) mit dem Anlagebereich (6, 60) für das Betätigungselement zur Aufnahme einer Betätigungskraft und ein auf dem Innenteil (5a; 50a) gelagertes Außenteil (5b; 50b) mit einem Lagerflansch (21) zur Anordnung des Ausrücklagers (7) umfasst.

2. Ausrückvorrichtung nach Anspruch 1,
**dadurch gekennzeichnet,**
**dass** die Teile (5a, 5b; 50a; 50b) über an diesen ausgeführten axiale Anlageflächen (25, 27; 52a,b; 54a,b; 56a,b; 68) gegenseitig anliegen.

3. Ausrückvorrichtung nach Anspruch 1 oder 2,
**dadurch gekennzeichnet,**
**dass** an zumindest einem der Teile (50a; 50b) axial gestufte Anlageflächen (52a, b; 54a, b; 56a, b) ausgebildet sind.

4. Ausrückvorrichtung nach Anspruch 3,
**dadurch gekennzeichnet,**
**dass** die gestuften Anlageflächen (52a, b; 54a, b; 56a, b) paarweise, an der Mittelachse des Teils (50b) gegenüberliegend ausgeführt sind.

5. Ausrückvorrichtung nach einem der Ansprüche 1-4,
**dadurch gekennzeichnet,**
**dass** die gegenseitige Drehlage der Teile (5a, 5b; 50a; 50b) bei einem Zusammenbau durch eine Verdrehsicherung (31, 35; 70; 72) festgelegt wird.

6. Ausrückvorrichtung nach einem der Ansprüche 1-5,
**dadurch gekennzeichnet,**
**dass** die Teile (5a, 5b; 50a; 50b) bei einem Zusammenbau durch axiale Sicherungsmittel (31, 35; 74, 76) unverlierbar gesichert sind.

7. Ausrückvorrichtung nach Anspruch 5 und 6,
**dadurch gekennzeichnet,**
**dass** die Verdrehsicherung (31, 35) und die axialen Sicherungsmittel (31, 35) gemeinsam ausgeführt sind.

8. Ausrückvorrichtung nach einem der Ansprüche 1-7,
**dadurch gekennzeichnet,**
**dass** die Teile der Schiebehülse (5a, 5b; 50a; 50b) aus einem wärmebeständigen Kunststoff gefertigt sind.

9. Ausrückvorrichtung nach einem der Ansprüche 3-8,
**dadurch gekennzeichnet,**
**dass** das Teil (50b) zur äußeren Markierung der gestuften Anlageflächen 52a,b; 54a, b, 56a,b einen Strichcode 78 aufweist, der bei der Montage mit einer signifikanten Stelle an dem jeweils anderen Teil (50a) zur Deckung gebracht werden kann.

## Claims

1. Release device (1) for a friction clutch of a motor vehicle, comprising
- a guide tube (3),
- a sliding sleeve (5; 50) which is of multi-part design and axially movable on the guide tube (3), which sliding sleeve (5; 50) has a contact region (6; 60) for an actuating element for absorbing an actuating force,
- a release bearing (7) which is arranged coaxially with respect to the sliding sleeve (5; 50), having a first bearing ring (9) which is arranged so as to be rotationally fixed with respect to the sliding sleeve (5; 50), rolling bodies (15) and an encircling second bearing ring (11) which is operatively connected to an actuating element (19) of the friction clutch,
**characterized**
**in that** the sliding sleeve (5; 50) comprises an inner part (5a; 50a), which is arranged on the guide tube (3) and which has the contact region (6, 60) for the actuating element for absorbing an actuating force, and an outer part (5b; 50b), which is mounted on the inner part (5a; 50a) and which has a bearing flange (21) for arranging the release bearing (7).

2. Release device according to Claim 1,
**characterized**
**in that** the parts (5a, 5b; 50a; 50b) bear against one another by means of axial contact faces (25, 27; 52a,b; 54a,b; 56a,b; 68) which are formed thereon.

3. Release device according to Claim 1 or 2,
**characterized**
**in that** axially stepped contact faces (52a,b; 54a,b; 56a,b) are formed on at least one of the parts (50a; 50b).

4. Release device according to Claim 3,
**characterized**
**in that** the stepped contact faces (52a,b; 54a,b; 56a,b) are formed opposite one another in pairs about the central axis of the part (50b).

5. Release device according to one of Claims 1-4,
**characterized**
**in that** the rotational position of the parts (5a, 5b; 50a; 50b) relative to one another is fixed during assembly by means of an anti-twist device (31, 35; 70; 72).

6. Release device according to one of Claims 1-5,
**characterized**
**in that** the parts (5a, 5b; 50a; 50b) are captively secured during assembly by axial securing means (31, 35; 74, 76).

7. Release device according to Claim 5 and 6,
**characterized**
**in that** the anti-twist device (31, 35) and the axial securing means (31, 35) are formed together.

8. Release device according to one of Claims 1-7,
**characterized**
**in that** the parts of the sliding sleeve (5a, 5b; 50a; 50b) are produced from a heat-resistant plastic.

9. Release device according to one of Claims 3-8,
**characterized**
**in that** the part (50b), for the outer marking of the stepped contact faces (52a,b; 54a,b, 56a,b) has a bar code (78) which, during assembly, can be placed in alignment with a significant point on the in each case other part (50a).

## Revendications

1. Dispositif de débrayage (1) pour un embrayage à friction d'un véhicule automobile, comprenant
- un tube de guidage (3),
- un manchon coulissant (5 ; 50) réalisé en plusieurs parties et pouvant être déplacé axialement sur le tube de guidage (3), manchon qui présente une région d'application (6 ; 60) pour un élément d'actionnement destiné à recevoir une force d'actionnement,
- une butée de débrayage (7) disposée coaxialement au manchon coulissant (5 ; 50), avec une première bague de butée (9) disposée en solidarité de rotation avec le manchon coulissant (5 ; 50), des éléments roulants (15) et une deuxième bague de butée rotative (11), qui est fonctionnellement reliée à un organe d'actionnement (19) de l'embrayage à friction,
**caractérisé en ce que** le manchon coulissant (5 ; 50) comprend une partie intérieure (5a ; 50a) disposée sur le tube de guidage (3) et munie de la région d'application (6 ; 60) pour l'élément d'actionnement destiné à recevoir une force d'actionnement, et une partie extérieure (5b ; 50b) montée sur la partie intérieure (5a ; 50a) et munie d'une bride de palier (21) pour recevoir la butée de débrayage (7).

2. Dispositif de débrayage selon la revendication 1, **caractérisé en ce que** les parties (5a, 5b ; 50a, 50b) sont en application mutuelle par l'intermédiaire de surfaces d'application axiales (25, 27 ; 52a,b ; 54a,b ; 56a,b ;58) réalisées sur elles.

3. Dispositif de débrayage selon la revendication 1 ou 2, **caractérisé en ce que** des surfaces d'application axialement échelonnées (52a,b ; 54a,b ; 56a,b) sont formées sur au moins une des parties (50a ; 50b).

4. Dispositif de débrayage selon la revendication 3, **caractérisé en ce que** les surfaces d'application échelonnées (52a,b ; 54a,b ; 56a,b) sont réalisées par paires, en vis-à-vis par rapport à l'axe médian de la partie (50b).

5. Dispositif de débrayage selon l'une des revendications 1 à 4, **caractérisé en ce que** la position de rotation relative des parties (5a, 5b ; 50a, 50b) est définie par un moyen de blocage en rotation (31, 35 ; 70, 72) lors de leur assemblage.

6. Dispositif de débrayage selon l'une des revendications 1 à 5, **caractérisé en ce que** les parties (5a, 5b ; 50a, 50b) sont, lors de leur assemblage, sont solidarisées de manière imperdable par des moyens d'assujettissement axiaux (31, 35 ; 74, 76).

7. Dispositif de débrayage selon les revendications 5 et 6, **caractérisé en ce que** le moyen de blocage en rotation (31, 35) et les moyens d'assujettissement axiaux (31, 35) sont les mêmes.

8. Dispositif de débrayage selon l'une des revendications 1 à 7, **caractérisé en ce que** les parties (5a, 5b ; 50a, 50b) du manchon coulissant sont fabriquées en une matière plastique résistant à la chaleur.

9. Dispositif de débrayage selon l'une des revendications 3 à 8, **caractérisé en ce que** la partie (50b) présente, pour le marquage extérieur des surfaces d'application échelonnées (52a,b ; 54a,b ; 56a,b) un code-barre (78) qui, lors du montage, peut être amené en coïncidence avec un emplacement pertinent sur l'autre partie respective (50a).
